# EUROPÄISCHE PATENTANMELDUNG

(11) **EP 4 821 648 A1**
(43) Veröffentlichungstag der Anmeldung: **14.10.2026**
(21) Anmeldenummer: 25168732.3
(22) Anmeldetag: 07.04.2025
(51) Int. Cl.: B28C 7/04, B01F 35/21, B28C 9/00, G01G 19/12, B28C 7/16

(54) **ANLAGE UND VERFAHREN ZUM HERSTELLEN EINER BAUSTOFF-SUSPENSION AN EINER BAUSTELLE**

(71) Anmelder: BAUER MAT Slurry Handling Systems Zweigniederlassung der BAUER Maschinen GmbH, 87509 Immenstadt-Seifen (DE)
(72) Erfinder: Däumler, Rolf, 87545 Burgberg (DE)
(74) Vertreter: Wunderlich & Heim Patentanwälte PartG mbB

(57) **Zusammenfassung**

1. Anlage zum chargenweisen Herstellen einer Baustoff-Suspension an einer Baustelle, mit einer Wasserversorgung (1), insbesondere einem Wassertank, mit einem ersten Dosierorgan an einem Auslass, mindestens einem Bevorratungssilo (2, 3) für jeweils einen riesel- oder fließfähigen Stoff, insbesondere Feststoff, wobei das oder jedes Bevorratungssilo (2, 3) mit einem jeweiligen zweiten Dosierorgan an einem Auslass versehen ist, einem M ischer (4), der so angeordnet ist, dass er mit Anmischwasser aus der Wasserversorgung (1) und Stoff, insbesondere Feststoff aus dem mindestens einen oder jedem Bevorratungssilo (2, 3) beschickt werden kann, indem die jeweiligen ersten und zweiten Dosierorgane geöffnet werden, wobei dem Mischer (4) eine Wiegeeinrichtung (5) zum kontinuierlichen Messen der in den Mischer (4) zugeführten Stoffmassen zugeordnet ist, und einer Steuerungseinrichtung, die ausgestaltet ist, um auf der Grundlage von Masse-Sollwerten einer vorgebbaren Rezeptur die ersten und zweiten Dosierorgane zum Öffnen und Schließen anzusteuern, um nacheinander Anmischwasser und Feststoff/Feststoffe einer Charge der Baustoff-Suspension gemäß der Rezeptur in den Mischer (4) zuzuführen, wobei das jeweilige Dosierorgan zum Schließen angesteuert wird, sobald der Masse-Sollwert des jeweiligen Anmischwassers/Stoffes gemäß der Rezeptur in den Mischer (4) zugeführt ist. Die Steuerungseinrichtung ist ausgestaltet, um nach dem Ansteuern zum Schließen des jeweiligen Dosierorgans und vor dem Ansteuern zum Öffnen eines nächsten Dosierorgans innerhalb eines bestimmten Zeitintervalls eine Abweichung eines Istwerts eines Messwerts von der Wiegeeinrichtung (5) von dem Sollwert der zuvor in den Mischer (4) zugeführten Masse eines Stoffes zu überprüfen/bestimmen und aus der Abweichung eine Änderung eines Schließzeitpunktes des jeweiligen Dosierorgans zu ermitteln, die bei der Herstellung einer nachfolgenden Charge derselben Rezeptur beim Ansteuern des Schließens des jeweiligen Dosierorgans verwendet/berücksichtigt wird.

## Beschreibung

Die Erfindung betrifft eine Anlage und ein Verfahren zum chargenweisen Herstellen einer Baustoff-Suspension an einer Baustelle.

Typische Bauverfahren, bei denen vor Ort an einer Baustelle Baustoff-Suspensionen hergestellt werden, indem Wasser mit Feststoffen und ggf. weiteren Zuschlägen gemischt wird, sind die Herstellung von Ankern (Litzenanker, Selbstbohranker oder Mikropfähle) oder Bodenmischverfahren wie z. B. Fräsenmischverfahren Ein- oder Mehrsäulenm ischverfahren.

In der Regel werden Suspensionen auf Baustellen im Spezialtiefbau mit geeigneten Mischsystemen hergestellt, die einen Mischer, Bevorratungssilo(s) für die Feststoffe, z. B. Zement, Bentonit usw. und ggf. weitere Zuschläge sowie eine Wasserversorgung umfassen.

Der Mischer wird in der Regel über eine Wasserzuleitung mit entsprechenden Dosierelementen wie Klappen oder Absperrventilen oder Tanksystemen mit Anmischwasser beschickt. Die Feststoffdosierung erfolgt in der Regel über eine Förderschnecke, welche an einem Auslass eines Bevorratungssilos angebaut ist. Die Klappen, Absperrventile und Förderschnecken werden im Rahmen dieser Offenbarung unter dem Begriff "Dosierorgane" zusammengefasst, die zum Starten und Stoppen einer Zufuhr des jeweiligen Stoffes betätigt, beispielsweise geöffnet, geschlossen oder anderweitig aktiviert oder gestoppt bzw. abgeschaltet werden.

Der Begriff "Stoffe" umfasst im Rahmen dieser Offenbarung Wasser sowie andere Flüssigkeiten und Feststoffe/Additive, also alle rieselfähigen und fließfähigen Stoffe, auch Stoffgemische, die typischerweise als Komponenten einer Rezeptur zur Herstellung einer Baustoff-Suspension in "Baustellenüblichen" Mengen über eine Anlage automatisch dosiert, zusammengeführt und gemischt werden.

Eine Dosiersteuerung steuert in Verbindung mit dem Mischer mit Wiegesystem, ggf. einer Fördermengenmessung bei Flüssigkeiten, die chargenweise Herstellung der Suspension auf Grundlage von Rezeptvorgaben, die vor Beginn der Suspensionsherstellung in die Anlagensteuerung eingegeben oder aus einem Speicher abgerufen wurden. Die zugegebenen Komponentenmengen können im Mischer mit dem Wiegesystem verwogen werden. Zum Dosieren der Komponenten gibt die Dosiersteuerung der Anlagensteuerung (zum Start und Stopp) Signale an die Dosierorgane aus, wobei die Dosierung der Komponenten in den Mischer zeitlich nacheinander erfolgt.

Vom Wiegesystem des Mischers wird das zunehmende Gewicht der jeweils dosierten Komponente erfasst und bei Erreichen des Endgewichtes wird von der Dosiersteuerung der Anlagensteuerung ein Signal zum Schließen oder Abschalten des jeweiligen Dosierorganes ausgegeben.

Aufgrund von zeitlichen Verzögerungen der Signalübertragung, bauteilbedingten Schalthysteresen, Anlaufverzögerungen einer Förderschnecke, Leitungslängen stromab eines Dosierorgans, Toträumen, Verklumpen von Stoffen etc. kommt es zu einem verzögerten Schließen oder Abschalten des Dosierorganes und/oder einem unkontrollierten Nachlauf von Stoffen in den Mischer oder zu einer Rückhaltung von Stoffmengen stromauf des Mischers in Toträumen oder Verklumpungen und in der Folge zu einer Über- oder Unterdosierung einzelner Stoffe in der aktuell hergestellten Charge im Mischer. Abweichungen von der Rezeptur in einzelnen Chargen und somit auch Abweichungen in der Suspensionsqualität und deren Eigenschaften sind die Folge.

Bei der Dosierung von pulverförmigen Feststoffen aus Silos mittels einer Förderschnecke kann in diesem Zusammenhang insbesondere ein Dosierungsfehler auftreten, da Förderschnecken in Abhängigkeit ihres Füllgrades eine definierte Förderleistung in Abhängigkeit von Steigung, Durchmesser und Drehzahl der Schneckenwendel haben. Je nachdem, wie gut oder schlecht der Feststoff aus dem Silo in den Schneckeneinlauf nachfließt, verändert sich der Füllgrad der Schnecke und somit die Förderleistung. Dieser Sachverhalt wird auch durch den wechselnden Füllgrad des Silos und Feuchte- oder Temperaturänderung durch die Witterung stark beeinflusst.

In der Praxis wird diese Über- oder Unterdosierung nach Möglichkeit durch eine manuelle Änderung der Dosiermengen, abweichend von der vorgegebenen Rezeptur kompensiert. Ein Qualitätsnachweis bezogen auf die tatsächliche Zusammensetzung der hergestellten Suspensionscharge ist somit, sofern er überhaupt geführt werden kann, fragwürdig.

Bei der chargenweisen Herstellung von Baustoff-Suspensionen an einer Baustelle treten also potentiell eine Reihe von Problemen auf wie die Über- oder Unterdosierung von Mischungskomponenten bei der Suspensionsherstellung in Abweichung von einer gewünschten Rezeptur mit daraus resultierender Abweichung der gewünschten bzw. geplanten Qualität und Eigenschaften, eine mangelhafte Dokumentation der tatsächlich in einer bestimmten Charge der hergestellten Suspension enthaltenen Komponenten bzw. deren Mengen sowie der Umstände des Herstellungsprozesses (Datum, Uhrzeit, Temperaturen, Ort, Luftfeuchtigkeit etc.), ein zu spätes Disponieren von verwendeten Feststoffen und daraus resultierende Produktionsausfälle und -verzögerungen mangels genauer Kenntnis der tatsächlich verbrauchten Mengen, die auch auf nachfolgende Bearbeitungsschritte durchschlagen, sowie Mehrverbräuche an Feststoffen bzw. Zuschlägen durch ungenaue Zumessung der Sollmengen und somit Mehrkosten.

Aus dieser Vielzahl von Störgrößen ergeben sich ständig wechselnde Einflüsse auf die Genauigkeit der Dosierung von Komponenten in einen Mischer bzw. in einer damit hergestellten Charge einer Suspension in Abweichung von der Rezepturvorgabe.

Um dennoch eine Konstanz in der Suspensionsdichte und -zusammensetzung zu erreichen, ist ein Bediener der Mischanlage gezwungen, ständig manuelle Anpassungen an der Rezeptureingabe oder Anlagenparametern vorzunehmen. Dabei hat die individuelle Erfahrung bzw. mangelnde Erfahrung der Bediener einen großen Einfluss auf die Qualität der Suspension. Eine hohe Reproduktionsgenauigkeit der Chargenzusammensetzung selbst bei gleicher Rezepturvorgabe ist daher kaum möglich.

Es ist daher die **Aufgabe** der vorliegenden Erfindung, zumindest einige dieser Probleme zu lösen und insbesondere die Qualität von chargenweise hergestellten Baustoff-Suspensionen und die Effizienz des Prozesses zu verbessern.

Zur Lösung bringt die Erfindung eine Anlage zum chargenweisen Herstellen einer Baustoff-Suspension an einer Baustelle gemäß Anspruch 1 und ein Verfahren zum chargenweisen Herstellen einer Baustoff-Suspension mit den Merkmalen des Anspruches 9 in Vorschlag. Bevorzugte Ausgestaltungen sind in den jeweiligen abhängigen Ansprüchen angegeben.

Insbesondere betrifft die Erfindung demnach eine Anlage zum chargenweisen Herstellen einer Baustoff-Suspension an einer Baustelle, mit einer Wasserversorgung, insbesondere einem Wassertank, mit einem ersten Dosierorgan an einem Auslass, mindestens einem Bevorratungssilo für jeweils einen riesel- oder fließfähigen Stoff, insbesondere Feststoff, wobei das oder jedes Bevorratungssilo mit einem jeweiligen zweiten Dosierorgan an einem Auslass versehen ist, einem Mischer, der so angeordnet ist, dass er mit Anmischwasser aus der Wasserversorgung und dem Stoff, insbesondere Feststoff, aus dem mindestens einen oder jedem Bevorratungssilo (sowie bei Bedarf mit einem oder mehreren flüssigen Additiven) beschickt werden kann, indem die jeweiligen ersten und zweiten Dosierorgane geöffnet werden, wobei dem Mischer eine Wiegeeinrichtung zum kontinuierlichen Messen der in den Mischer zugeführten Stoffmassen zugeordnet ist, und einer Steuerungseinrichtung, die ausgestaltet ist, um auf der Grundlage von Masse-Sollwerten einer vorgebbaren Rezeptur die ersten und zweiten Dosierorgane zum Öffnen und Schließen anzusteuern, um nacheinander das Anmischwasser und den Stoff/die Stoffe (sowie ggf. flüssige Additive) einer Charge der Baustoff-Suspension gemäß der Rezeptur in den Mischer zuzuführen, wobei das jeweilige Dosierorgan zum Schließen angesteuert wird, sobald der Masse-Sollwert des jeweiligen Anmischwassers/Stoffes (bzw. die Sollmenge des Additivs) gemäß der Rezeptur in den Mischer zugeführt ist.

Erfindungsgemäß ist die Steuerungseinrichtung weiterhin ausgestaltet, um nach dem Ansteuern zum Schließen des jeweiligen Dosierorgans und vor dem Ansteuern zum Öffnen eines nächsten Dosierorgans innerhalb eines bestimmten Zeitintervalls eine Abweichung eines Istwerts eines Messwerts von der Wiegeeinrichtung von dem Sollwert der zuvor in den Mischer zugeführten Masse eines Stoffes zu überprüfen/bestimmen und aus der Abweichung eine Änderung eines Schließzeitpunktes des jeweiligen Dosierorgans zu ermitteln, die bei der Herstellung einer nachfolgenden Charge derselben Rezeptur beim Ansteuern des Schließens des jeweiligen Dosierorgans (automatisch) verwendet/berücksichtigt wird.

Insbesondere betrifft die Erfindung demnach auch ein Verfahren zum chargenweisen Herstellen einer Baustoff-Suspension an einer Baustelle, mit einer Anlage, die eine Wasserversorgung, insbesondere einen Wassertank, mit einem ersten Dosierorgan an einem Auslass, mindestens ein Bevorratungssilo für jeweils einen riesel- oder fließfähigen Stoff, insbesondere Feststoff, wobei das oder jedes Bevorratungssilo mit einem jeweiligen zweiten Dosierorgan an einem Auslass versehen ist, und einen Mischer aufweist, der so angeordnet ist, dass er mit Anmischwasser aus der Wasserversorgung und dem Stoff, insbesondere dem Feststoff, aus dem mindestens einen oder jedem Bevorratungssilo beschickt werden kann, indem die jeweiligen ersten und zweiten Dosierorgane geöffnet werden, wobei dem Mischer eine Wiegeeinrichtung zum kontinuierlichen Messen der in den Mischer zugeführten Stoffmassen zugeordnet ist, umfasst, mit den Schritten:
- Vorgeben einer Rezeptur mit Masse-Sollwerten von Stoffen einer Charge der herzustellenden Baustoff-Suspension, und
- Ansteuern, auf der Grundlage der Masse-Sollwerte der Rezeptur, der ersten und zweiten Dosierorgane zum Öffnen und Schließen, um nacheinander Anm ischwasser und den Stoff/die Stoffe einer Charge der Baustoff-Suspension gemäß der Rezeptur in den Mischer zuzuführen, wobei das jeweilige Dosierorgan zum Schließen angesteuert wird, sobald der Masse-Sollwert des jeweiligen Anmischwassers/Stoffes gemäß der Rezeptur in den Mischer zugeführt ist.

Erfindungsgemäß wird dabei nach dem Ansteuern zum Schließen des jeweiligen Dosierorgans und vor dem Ansteuern zum Öffnen eines nächsten Dosierorgans innerhalb eines bestimmten Zeitintervalls eine Abweichung eines Istwerts eines Messwerts von der Wiegeeinrichtung von dem Sollwert der zuvor in den Mischer zugeführten Masse eines Stoffes überprüft/bestimmt und aus der Abweichung eine Änderung eines Schließzeitpunktes des jeweiligen Dosierorgans ermittelt, die bei der Herstellung einer nachfolgenden Charge derselben Rezeptur beim Ansteuern des Schließens des jeweiligen Dosierorgans (automatisch) verwendet/berücksichtigt wird.

Die Steuerungseinrichtung justiert also während des gesamten Produktionsprozesses von Charge zu Charge die zeitlichen Korrekturen der Signale zur Abschaltung der jeweiligen Dosierorgane.

Die Anlage und das Verfahren der Erfindung basieren auf dem Grundgedanken, die Einhaltung von Zusammensetzungen von chargenweise hergestellten Baustoff-Suspensionen gemäß einer Rezepturvorgabe dadurch automatisiert zu verbessern, dass Abweichungen von einem Sollwert der Masse einzelner Komponenten der Rezeptur von einem Istwert der Masse im Rahmen der Herstellung einer (ersten) Charge automatisch ermittelt und gespeichert werden und auf der Basis der ermittelten Abweichung der Massen ebenfalls automatisch bei der Herstellung einer nachfolgenden (zweiten) Charge derselben Rezeptur die Zeitpunkte der Ansteuerung der zugehörigen Dosierorgane zum Stoppen der Zufuhr korrigiert, d. h. vorverlegt oder nachverlegt werden.

Dadurch, dass mehrere Chargen in der Regel an einer gegebenen Baustelle hintereinander bzw. im engen zeitlichen Zusammenhang wiederholt hergestellt werden, können zahlreiche relevante und komplexe Einflüsse auf die Genauigkeit einer effektiven Zumessung der Komponentenmassen zu einer Charge vor Ort einfach, nämlich lediglich durch Erfassung des Istwerts der zugeführten Masse an der ohnehin vorhandenen Wiegeeinrichtung des Mischers festgestellt und für eine nachfolgende Charge durch Beeinflussung eines einzelnen Parameters, nämlich der Verschiebung des Zeitpunkts der Signalausgabe an das jeweilige Dosierorgan zum Stoppen der Zufuhr, kompensiert werden.

Die Dauer des bestimmten Zeitintervalls, in dem nach der Ausgabe des Signals zum Schließen eines jeweiligen Dosierorgans eine Abweichung eines Istwerts eines Messwerts von der Wiegeeinrichtung von dem Sollwert der zuvor in den Mischer zugeführten Masse eines Stoffes überprüft/bestimmt wird, kann fest oder veränderbar vorgegeben werden oder dynamisch bestimmt werden, beispielsweise indem auf eine Änderungsrate (Änderung der erfassten Masse pro Zeit) abgestellt und die Überprüfungsphase abgebrochen wird, wenn die Änderungsrate einen Schwellenwert unterschreitet.

Damit kann die Qualität der Suspensionszusammensetzung jeder einzelnen Charge, jedenfalls bei Wiederholung quasi automatisch und ohne Steuerungseingriffe einer Bedienperson sichergestellt und die Reproduktionsgenauigkeit auch bei temporär wirkenden und komplexen, d. h. direkt nur mit großem anlagentechnischen Aufwand erfassbaren Einflüssen erhöht werden. Eine Änderung eines Parameters, der Einfluss auf die tatsächlich in den Mischer eingebrachte Menge an Stoffen (Wasser bzw. Flüssigkeit oder Feststoff/Additiv) wird daher bereits bei der jeweils nachfolgenden Charge korrigiert und wirkt sich nicht auf eine Vielzahl von Chargen aus, selbst wenn die Änderung nur temporär bestand.

Die Anlage bzw. das entsprechende Verfahren ist in der Lage, wiederholte Mischprozesse vor Ort an einer Baustelle vollautomatisch ohne permanente Eingriffe von Personal durchzuführen. Die Erfindung ermöglicht die Reduzierung von Kosten bei gleichzeitig verbesserter Effizienz, Qualität und Reproduzierbarkeit sowie Dokumentation des Produktionsergebnisses. Ein Anlagenbediener, sofern vorhanden, kann sich damit auf die Überwachung des Gesamtprozesses und Qualitätssicherung konzentrieren.

Durch die automatische Verhinderung von Überdosierungen wird mit der Anlage bzw. dem Verfahren unnötiger Verbrauch von Rohstoffen, im speziellen von Baustoffen in Form von Zement, Bentonit usw. vermieden bzw. reduziert und eine Ausschussquote verringert.

Vorzugsweise ist die Steuerungseinrichtung ausgestaltet, um die ersten und zweiten Dosierorgane nach Maßgabe eines Messwerts von der Wiegeeinrichtung zum Schließen anzusteuern, wobei das jeweilige Dosierorgan zum Schließen angesteuert wird, sobald der Masse-Sollwert des jeweiligen Anmischwassers/Stoffes gemäß der Rezeptur nach Maßgabe des Messwerts von der Wiegeeinrichtung in den Mischer zugeführt ist. Diese Variante der gravimetrischen Dosierung der Stoffe in den Mischer ist zwar aufgrund der größeren Genauigkeit besonders bevorzugt, wobei im allgemeineren Ansatz der Erfindung aber auch eine Dosierung nach Maßgabe einer zeitlichen Ansteuerung der Dosierorgane und/oder einer volumetrischen Ansteuerung der Dosierorgane umfasst sein soll, wenn entsprechende Relationen zu den Vorgaben der Rezeptur vorhanden sind (durch die Steuerungseinrichtung aus einem Speicher abgerufen oder auf der Grundlage einer hinterlegten Funktionsbeziehung ermittelt werden können). Die nachlaufende Überprüfung der Abweichung von Istwert und Sollwert mittels der Wiegeeinrichtung bleibt davon unbenommen.

Vorzugsweise ist die die Steuerungseinrichtung weiterhin ausgestaltet, um bei einem Überschießen des Istwerts über den Sollwert den Schließzeitpunkt des jeweiligen Dosierorgans bzw. die Ausgabe des entsprechenden Befehlssignals vorzuverlegen (gegenüber dem Zeitpunkt bei der vorausgehenden Charge) und bei einem Unterschießen des Istwerts über den Sollwert den Schließzeitpunkt des jeweiligen Dosierorgans nachzuverlegen bzw. die Ausgabe des entsprechenden Befehlssignals zu verzögern. Hierzu kann es ggf. erforderlich sein, auf der Basis der bei der Herstellung der vorausgehenden Charge ermittelten Massenabweichung zwischen Istwert und Sollwert ein Zeitintervall zu bestimmen, in dem die der Differenz entsprechende Menge an Stoff bei geöffnetem Dosierorgan zugeführt wird. Dies kann beispielsweise auf der Grundlage der im Betrieb erfassten Daten aktuell bestimmt und/oder in der Steuerungseinrichtung abgespeichert werden. Die Verschiebung des Schließzeitpunkts entsprechend der erfassten Abweichung führt jedenfalls dazu, dass das betreffende Dosierorgan bei der Herstellung der nächsten Charge beispielsweise etwas früher geschlossen wird, und der Nachlauf an Stoff nach der Ausgabe des Schließsignals gerade dazu führt, dass der Istwert der in den Mischer zugeführten Masse dem Sollwert der Rezeptur entspricht.

Vorzugsweise ist die Steuerungseinrichtung weiterhin so ausgestaltet, dass mit der Rezeptur auch einen Dosiertoleranz für den jeweiligen Stoff vorgebbar ist und die Dosiertoleranz bei der Überprüfung der Abweichung bzw. dem Vergleich von Istwert und Sollwert nach dem Schließen des jeweiligen Dosierorgans und der Bestimmung der Änderung des Schließzeitpunktes des jeweiligen Dosierorgans berücksichtigt wird. Durch Vorgabe einer gewissen Toleranz für jeden Stoff einer Rezeptur, beispielsweise +/- 2%, deren Wert auch verändert werden kann, darf der Istwert der zugeführten Masse des Stoffes vom Sollwert der Masse gemäß Rezeptur gemäß der vorgegeben Dosiertoleranz abweichen, ohne dass eine Zeitpunktverschiebung des Schließzeitpunktes bei der nachfolgenden Charge ausgelöst wird.

Vorzugsweise ist die Steuerungseinrichtung weiterhin ausgestaltet, um die nach dem Schließen des jeweiligen Dosierorgans im Rahmen der Überprüfung erfassten Istwerte der bei der Herstellung einer jeweiligen Charge in den Mischer zugeführten Stoffmasse zu protokollieren und als identifizierbaren Datensatz, vorzugsweise zusam m en mit einem Datum/Zeitstempel und/oder erfassten Umgebungs- oder Betriebsdaten bereitzustellen. Wenn der Überwachungsvorgang bei allen Dosiervorgängen und nach jeder Charge stattfindet und das Erfassungsergebnis protokolliert wird, ist einen lückenlose Dokumentation der tatsächlichen Chargenzusammensetzungen, ggf. in Verbindung mit anderen relevanten Parametern gewährleistet. Dadurch wird die Qualität des Prozesses verbessert und eine Ursachenforschung bei etwaigen Schadensereignissen erleichtert.

In diesem Protokoll werden also für jede Charge beispielsweise Datum, Uhrzeit, eine Dauer jedes einzelnen Dosiervorganges, Ist-Dosiermengen jeder einzelnen Komponente, der Soll-Istvergleich der Dosiermengen jeder einzelnen Komponente, Misch- und Entleerzeit des Mischers, die gesamte Chargenproduktionszeit, die maximale Stromaufnahme des Mischerantriebs sowie ggf. weitere Umgebungsparameter wie Ort (Koordinaten - sofern verfügbar), Temperatur, Luftfeuchtigkeit etc. abgespeichert. Ein Protokoll jeder Charge mit den Ist-Werten der enthaltenen bzw. in den Mischer zugeführten Stoffmengen und ggf. weiteren Daten, die aus den zuvor genannten ausgewählt sein können, kann beispielsweise in einem tabellarischen csv-Format ausgegeben werden.

Vorzugsweise ist die Steuerungseinrichtung weiterhin ausgestaltet, um die nach dem Schließen des jeweiligen Dosierorgans im Rahmen der Überprüfung erfassten Istwerte der bei der Herstellung von mehreren Chargen in den Mischer zugeführten Stoffe zu protokollieren und als Verbrauchswert der jeweiligen Stoffe zu kumulieren und als identifizierbaren Datensatz bereitzustellen, sowie vorzugsweise eine Warnung und/oder Bestellung von Nachschub des jeweiligen Stoffes auszulösen, wenn festgestellt wird, dass ein bestimmter Bestand des jeweiligen Stoffes in dem Bevorratungssilo unterschritten wird.

Die aus dem Chargenprotokoll ermittelten Ist-Dosiermengen jeder einzelnen Komponente können beispielsweise automatisch in unterschiedlichen Speichern der Steuerung abgelegt und kumuliert werden. Diese Speicherung der tatsächlichen Verbrauchsmengen der einzelnen Stoffe dient dem Überblick der Komponentenverbräuche und ermöglich ein frühzeitiges Disponieren von benötigten Materialien (z. B. Nachschub von Zement oder Bentonit).

Des Weiteren kann aus den Protokollen die Suspensionsdichte zur Qualitätssicherung ermittelt werden.

Die Steuerungseinrichtung kann weiterhin ausgestaltet sein, um auf der Basis der protokollierten Datensätze eine aktuelle, mögliche Mischleistung bzw. -kapazität der Anlage zu ermitteln und bereitzustellen, um die Produktionsplanung und -steuerung von nachgeschalteten Prozessen und/oder Geräten zu unterstützen

Zur Bedienung der Anlage, insbesondere der Steuerungseinrichtung kann die Steuerungseinrichtung ein Display mit einem Touch-Screen für Berührungseingaben aufweisen, auf dem Komponenten der Anlage und deren produktionsrelevante Parameter zur Überwachung der Abläufe in einem Prozess-Schaubild visualisiert werden und Eingaben, insbesondere der Rezepturen vorgenommen werden können.

Die Bedienung der Steuerungseinrichtung kann damit in vorteilhafter Weise über ein Display auf einem Touch-Screen für Berührungseingaben visualisiert und ausgeführt werden. Die bildliche Darstellung der einzelnen Komponenten der Anlage in einem Prozess-Schaubild ermöglicht ein intuitives Verstehen aller Anlagenkomponenten, deren Zusammenspiel im Betrieb und deren aktuellen Betriebszustand, sowie eine interaktive, dynamische Bedienoberfläche und Menüführung zur Eingabe produktionsrelevanter Parameter oder Rezepturen und zur Überwachung der Abläufe in Echtzeit.

Dadurch kann der Aufwand für Schulung und Einweisung von Personal reduziert werden und selbst weniger qualifiziertes Personal kann sich schnell mit der Steuerung zurechtfinden.

Durch eine Verteilung bzw. Zugänglichmachung der generierten Daten in einem Netzwerk können auch mehrere kombinierte Anlagen und damit verknüpfte Maschinen gesteuert werden.

Beispielsweise kann eine erweiterte Anlage mehrere Mischer zur unabhängigen Herstellung von Chargen einer Baustoff-Suspension (mit gleicher oder auch unterschiedlicher Rezeptur) aufweisen, die von derselben Wasserversorgung und denselben Bevorratungssilos versorgt werden. Die Zusammenführung der tatsächlichen Verbrauchsdaten auf der Basis der Chargenprotokolle erleichtert die anlagenübergreifende Überwachung der Vorräte und Verbräuche und Organisation des Nachschubs.

Der Signaltransport (Steuerbefehle für Dosierorgane von der Steuereinrichtung zu den Dosierorganen) und der Datenaustausch der Protokolle kann auf Basis einer leitungsgebundenen Datenübertragung oder durch eine drahtlose, d. h. auf Funk basierte Datenübertragung realisiert werden.

Die Bereitstellung der Daten bzw. der Protokolle einer Anlage für einen Fernzugriff ermöglicht eine Remote-Bedienung, einen Remote-Support und schnelle Hilfe bei Störungen und erleichtert eine Fehlersuche.

Die zuvor beschriebenen Wirkungen gelten gleichermaßen für die Anlage wie für das Verfahren.

Die Erfindung wird im Folgenden anhand einer beispielhaften Ausführungsform mit Bezug auf die beigefügte Zeichnung erläutert. Darin zeigt:

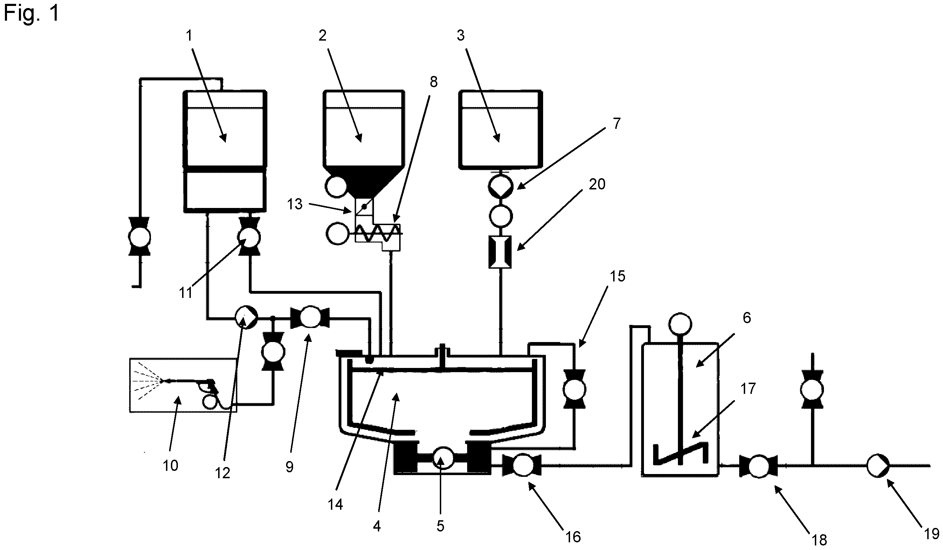

Fig. 1 ein Anlagenschema einer beispielhaften Mischanlage zum chargenweisen Herstellen einer Baustoff-Suspension an einer Baustelle.

Die in Fig. 1 schematisch gezeigte Anlage dient der Erläuterung von Merkmalen der Erfindung, wobei nicht alle gezeigten Komponenten für die Ausführung der Erfindung zwingend erforderlich sind. Eine übergeordnete Steuerungseinrichtung, die mit den einzelnen Komponenten der Anlage verbunden ist und kommuniziert, ist in dem Schema nicht dargestellt.

Die Anlage zum chargenweisen Herstellen einer Baustoff-Suspension umfasst als notwendigen Bestandteil eine Wasserversorgung 1, beispielsweise mit einem Wassertank als Puffer, mit einem ersten Dosierorgan an einem Auslass. Der Wassertank kann mit einer automatischen Befüll-Steuerung inklusive Füllstandüberwachung ausgestaltet sein, um das Füllniveau und damit den Wasserdruck am Auslass auf einem konstanten Niveau zu halten. Das Dosierorgan kann ein fernbetätigbares, steuerbares Ventil 11 oder eine steuerbare Pumpe 12, ggf. in Verbindung mit einem fernbetätigbaren, steuerbaren Ventil 9 umfassen.

Die Wasserversorgung 1 kann mit einer Sprühlanze 10 verbunden sein, die zwar keinen notwendigen Bestandteil der Anlage zum Mischen darstellt, aber für Reinigungszwecke im Umfeld derselben eingesetzt werden kann.

Die Anlage umfasst als weiteren notwendigen Bestandteil mindestens ein Bevorratungssilo 2 für jeweils einen rieselfähigen Feststoff, wobei das oder jedes Bevorratungssilo mit einem jeweiligen zweiten Dosierorgan an einem Auslass versehen ist. Das zweite Dosierorgan kann in diesem Fall einen Schneckenförderer 8 umfassen, in den von einem Auslass des Bevorratungssilos 2, ggf. über eine fernbetätigbare Steuerklappe 13 der Feststoff eingebracht wird und deren Betrieb über die Steuerungseinrichtung gesteuert wird. Wenn mehrere Feststoffe zur Herstellung einer Rezeptur benötigt werden, können mehrere dieser Bevorratungssilos 2 vorgesehen sein.

Die Anlage umfasst als weiteren notwendigen Bestandteil sodann einen Mischer 4, der so angeordnet ist, dass er mit Anm ischwasser aus der Wasserversorgung 1 und fließfähigem oder rieselfähigem Stoff oder Stoffgemisch, insbesondere Feststoff oder auch Flüssigkeit bzw. Additiv, aus dem mindestens einen oder jedem Bevorratungssilo 2 beschickt werden kann, indem die jeweiligen ersten und zweiten Dosierorgane geöffnet werden.

Dem Mischer 4 ist eine Wiegeeinrichtung 5 zum kontinuierlichen Messen bzw. Wiegen der in den Mischer 4 zugeführten Stoffmassen zugeordnet und die Wiegeeinrichtung 5 ist ebenfalls mit der Steuerungseinrichtung verbunden, um dieser das Erfassungs- bzw. Messergebnis kontinuierlich als Eingangssignal bereitzustellen. Der Mischer ist mit einer rotierbaren Rühr- bzw. Mischvorrichtung 14 in einem Mischraum versehen, deren Betrieb ebenfalls von der Steuerungseinrichtung gesteuert wird. Der Mischer kann als Kolloidal-Suspensionsmischer mit integrierter Wiegeeinrichtung ausgebildet sein, und kann eine von der Steuerungseinrichtung steuerbare Zirkulationseinrichtung 15 und Einrichtungen zur Überwachung von Sicherheitseinrichtungen aufweisen.

Zur Zugabe weiterer Zuschläge bzw. Additive, ggf. in flüssiger Form oder fester Form bzw. Pulverform, in den Mischer kann eines oder mehrere weitere Bevorratungssilo(s) oder -tanks 3 vorgesehen sein, die jeweils ein (zweites) Dosierorgan aufweisen, das - in Abhängigkeit von der Konsistenz des jeweiligen Stoffes - nicht notwendig eine Förderschnecke umfassen muss, sondern auch eine Förderpumpe 7, ggf. mit Durchflussmesser 20 umfassen kann, das aber ebenfalls von der Steuerungseinrichtung gesteuert werden kann, um bestimmte Mengen des jeweiligen Stoffes (Zuschlag bzw. Additiv) nach Maßgabe der Rezeptur in den Mischer 4 zu überführen. Die mit dem mit Durchflussmesser 20 hinreichend genau bestimmten bzw. bestimmbaren Mengen dieser Zuschläge bzw. Additive, müssen ggf. nicht notwendig (nochmals) über die Wiegeeinrichtung erfasst, gesteuert und bezüglich einer Abweichung vom Sollwert bestimmt werden. Vielmehr können die Zugabemengen auch auf Basis der Messung des Durchflussmessers 20 bestimmt und automatisch in das Protokoll der Chargenzusammensetzung aufgenommen werden.

An den Mischer 4 ist eine über die Steuerungseinrichtung ansteuerbare Entleer-Vorrichtung, hier mit einem Ventil 16, angeschlossen, um eine fertige Charge der Suspension aus dem Mischer 4 auszutragen und in einen optionalen Vorratsbehälter 6, hier mit integriertem Rührwerk 17, zu überführen. Dieser Vorratsbehälter 6 kann mit einer (nicht gezeigten) Füllstandüberwachung und Überwachung von Sicherheitseinrichtungen versehen sein, die nebst dem Rührwerk 17 mit der Steuerungseinrichtung kommunizieren können.

Aus dem Vorratsbehälter 6 (oder bei Fehlen desselben direkt aus dem Mischer 4) kann die Suspension nach Bedarf und Arbeitsfortschritt ausgetragen, ggf. unter Nutzung eines steuerbaren Ventils 18 und einer Förderpumpe 19, und zu einer Verbrauchsstelle an der Baustelle transportiert werden.

Der Ablauf der durch die Steuereinrichtung gesteuerten Prozesse zur chargenweisen Herstellung einer Baustoff-Suspension ist damit vereinfacht wie folgt:
Die Steuerungseinrichtung startet den Dosiervorgang der jeweiligen Komponenten bzw. Stoffe gemäß einer Rezeptur zur Herstellung einer Charge der Suspension generell nacheinander (so dass die Messung der zugeführten Menge an der Wiegeeinrichtung des Mischers sich auch nur auf einen jeweiligen Stoff bezieht) durch Ausgabe eines Steuersignals zum Öffnen des jeweiligen Dosierorgans und überwacht die in den Mischer 4 dosierte Menge über das Signal der Wiegeeinrichtung.

Ist der rezepturgemäße Sollwert für den jeweiligen Stoff erreicht, stoppt die Steuerungseinrichtung den Dosiervorgang durch Ausgabe eines Steuersignals an das entsprechende Dosierorgan und erfasst weiterhin, innerhalb eines bestimmten Zeitintervalls, die gemessene Istmenge (bzw. den zugehörigen Messwert von der Wiegeeinrichtung) und vergleicht diese mit dem Sollwert.

Erkennt die Steuerungseinrichtung am Ende des bestimmten Zeitintervalls eine Überdosierung, ermittelt sie automatisch den Zeitpunkt der Ausgabe des Steuersignals zum Stoppen des Dosiervorgangs, um den dieser vorverlegt werden muss, um die Differenz zwischen Ist- und Sollwert auszugleichen, und speichert diesen als Korrekturwert für die Verwendung bei der Herstellung der nächsten Charge in einem Speicher. Erst dann startet die Steuerungseinrichtung den Dosiervorgang der nächsten Komponente bzw. des nächsten Stoffes gemäß der Rezeptur (und verfährt beim Stoppen in entsprechender Weise).Im umgekehrten Sinn funktioniert die Steuerung bei Unterdosierung, wobei dann die Signalausgabe für das Abschalten des Dosierorganes bei der nächsten Charge verzögert erfolgt.

Die Steuereinrichtung kann die auf Basis früherer Dosiervorgänge bzw. Chargenherstellung im Speicher hinterlegten oder eingegebenen Korrekturwerte für die Ansteuerung des jeweiligen Dosierorgans zum Schließen aber auch schon bei der Herstellung einer ersten Charge und/oder bei der Herstellung von Chargen mit einer anderen Rezeptur zumindest als Ausgangseinstellung berücksichtigen, wenn sich herausstellt, dass dieses Dosierorgan, beispielsweise eine Förderschnecke, bei einem bestimmten Stoff bzw. einer bestimmten Stoffzusammensetzung und -eigenschaften immer um den ermittelten Korrekturwert vorverlegt gestoppt werden sollte, um eine in der Rezeptur vorgesehene Menge des Stoffes in den Mischer auszutragen. Denkbar ist auch, die Korrekturwerte über einen längeren Zeitraum zu Speichern und verschiedenen Konstellationen (Stoffen, Zugabemengen, weitere Parameter) zuzuordnen, um den passenden Korrekturwert als Ausgangs- oder Defaultwert auswählen zu können. Auch die Verwendung von Prinzipien des "Machine Learning" zur automatischen Bestimmung von Korrelationen ist denkbar.

Nach Zugabe aller Stoffe einer Charge dokumentiert die Steuerungseinrichtung die erfassten Istwerte der einzelnen Zugaben dieser Charge und ggf. weiterer Parameter zur Identifizierung der Charge in einem Protokoll und speichert dieses ab.

Die fertige Charge kann dann aus dem Mischer ausgetragen und direkt zur Verbrauchsstelle oder in den Vorratsbehälter überführt werden.

## Patentansprüche

1. Anlage zum chargenweisen Herstellen einer Baustoff-Suspension an einer Baustelle, mit
- einer Wasserversorgung (1), insbesondere einem Wassertank, mit einem ersten Dosierorgan an einem Auslass,
- mindestens einem Bevorratungssilo (2, 3) für jeweils einen riesel- oder fließfähigen Stoff, insbesondere Feststoff, wobei das oder jedes Bevorratungssilo (2, 3) mit einem jeweiligen zweiten Dosierorgan an einem Auslass versehen ist,
- einem Mischer (4), der so angeordnet ist, dass er mit Anm ischwasser aus der Wasserversorgung (1) und dem Stoff, insbesondere dem Feststoff, aus dem mindestens einen oder jedem Bevorratungssilo (2, 3) beschickt werden kann, indem die jeweiligen ersten und zweiten Dosierorgane geöffnet werden, wobei dem Mischer (4) eine Wiegeeinrichtung (5) zum kontinuierlichen Messen der in den Mischer (4) zugeführten Stoffmassen zugeordnet ist, und
- einer Steuerungseinrichtung, die ausgestaltet ist, um auf der Grundlage von Masse-Sollwerten einer vorgebbaren Rezeptur die ersten und zweiten Dosierorgane zum Öffnen und Schließen anzusteuern, um nacheinander das Anm ischwasser und den Stoff/die Stoffe einer Charge der Baustoff-Suspension gemäß der Rezeptur in den Mischer (4) zuzuführen, wobei das jeweilige Dosierorgan zum Schließen angesteuert wird, sobald der Masse-Sollwert des jeweiligen Anmischwassers/Stoffes gemäß der Rezeptur in den Mischer (4) zugeführt ist,
**dadurch gekennzeichnet, dass**
- die Steuerungseinrichtung weiterhin ausgestaltet ist, um nach dem Ansteuern zum Schließen des jeweiligen Dosierorgans und vor dem Ansteuern zum Öffnen eines nächsten Dosierorgans innerhalb eines bestimmten Zeitintervalls eine Abweichung eines Istwerts eines Messwerts von der Wiegeeinrichtung (5) von dem Sollwert der zuvor in den Mischer (4) zugeführten Masse eines Stoffes zu überprüfen/bestimmen und aus der Abweichung eine Änderung eines Schließzeitpunktes des jeweiligen Dosierorgans zu ermitteln, die bei der Herstellung einer nachfolgenden Charge derselben Rezeptur beim Ansteuern des Schließens des jeweiligen Dosierorgans verwendet/berücksichtigt wird.

2. Anlage gemäß Anspruch 1,
**dadurch gekennzeichnet, dass**
die Steuerungseinrichtung ausgestaltet ist, um die ersten und zweiten Dosierorgane nach Maßgabe eines Messwerts von der Wiegeeinrichtung (5) zum Schließen anzusteuern, wobei das jeweilige Dosierorgan zum Schließen angesteuert wird, sobald der Masse-Sollwert des jeweiligen Anmischwassers/Stoffes gemäß der Rezeptur nach Maßgabe des Messwerts von der Wiegeeinrichtung (5) in den Mischer (4) zugeführt ist.

3. Anlage gemäß Anspruch 1 oder 2,
**dadurch gekennzeichnet, dass**
die Steuerungseinrichtung weiterhin ausgestaltet ist, um bei einem Überschießen des Istwerts über den Sollwert den Schließzeitpunkt des jeweiligen Dosierorgans vorzuverlegen und bei einem Unterschießen des Istwerts über den Sollwert den Schließzeitpunkt des jeweiligen Dosierorgans nachzuverlegen.

4. Anlage gemäß einem der Ansprüche 1 bis 3,
**dadurch gekennzeichnet, dass**
die Steuerungseinrichtung weiterhin so ausgestaltet ist, dass mit der Rezeptur auch eine Dosiertoleranz für den jeweiligen Stoff vorgebbar ist und die Dosiertoleranz bei der Überprüfung der Abweichung von Istwert und Sollwert nach dem Schließen des jeweiligen Dosierorgans und der Bestimmung der Änderung des Schließzeitpunktes des jeweiligen Dosierorgans berücksichtigt wird.

5. Anlage gemäß einem der Ansprüche 1 bis 4,
**dadurch gekennzeichnet, dass**
die Steuerungseinrichtung weiterhin ausgestaltet ist, um die nach dem Schließen des jeweiligen Dosierorgans im Rahmen der Überprüfung erfassten Istwerte der bei der Herstellung einer jeweiligen Charge in den Mischer (4) zugeführten Stoffe zu protokollieren und als identifizierbaren Datensatz, vorzugsweise zusammen mit einem Datum/Zeitstempel und/oder erfassten Umgebungs- oder Betriebsdaten bereitzustellen.

6. Anlage gemäß einem der Ansprüche 1 bis 5,
**dadurch gekennzeichnet, dass**
die Steuerungseinrichtung weiterhin ausgestaltet ist, um die nach dem Schließen des jeweiligen Dosierorgans im Rahmen der Überprüfung erfassten Istwerte der bei der Herstellung von mehreren Chargen in den Mischer (4) zugeführten Stoffe zu protokollieren und als Verbrauchswert der jeweiligen Stoffe zu kumulieren und als identifizierbaren Datensatz bereitzustellen, sowie vorzugsweise eine Warnung und/oder Bestellung von Nachschub des jeweiligen Stoffes auszulösen, wenn festgestellt wird, dass ein Bestand des jeweiligen Stoffes in dem Bevorratungssilo (2,3) unterschritten wird.

7. Anlage gemäß einem der Ansprüche 1 bis 6,
**dadurch gekennzeichnet, dass**
die Steuerungseinrichtung weiterhin ausgestaltet ist, um auf der Basis der protokollierten Datensätze eine aktuelle Mischleistung der Anlage zu ermitteln und bereitzustellen.

8. Anlage gemäß einem der Ansprüche 1 bis 7,
**dadurch gekennzeichnet, dass**
die Steuerungseinrichtung ein Display mit einem Touch-Screen für Berührungseingaben aufweist, auf dem Komponenten der Anlage und deren produktionsrelevanten Parameter zur Überwachung der Abläufe in einem Prozess-Schaubild visualisiert werden und Eingaben, insbesondere der Rezepturen vorgenommen werden können.

9. Verfahren zum chargenweisen Herstellen einer Baustoff-Suspension an einer Baustelle, mit einer Anlage, die eine Wasserversorgung (1), insbesondere einen Wassertank, mit einem ersten Dosierorgan an einem Auslass, mindestens ein Bevorratungssilo (2, 3) für jeweils einen riesel- oder fließfähigen Stoff, insbesondere Feststoff, wobei das oder jedes Bevorratungssilo (2, 3) mit einem jeweiligen zweiten Dosierorgan an einem Auslass versehen ist, und einen Mischer (4) aufweist, der so angeordnet ist, dass er mit Anmischwasser aus der Wasserversorgung (1) und dem Stoff, insbesondere dem Feststoff, aus dem mindestens einen oder jedem Bevorratungssilo (2, 3) beschickt werden kann, indem die jeweiligen ersten und zweiten Dosierorgane geöffnet werden, wobei dem Mischer (4) eine Wiegeeinrichtung (5) zum kontinuierlichen Messen der in den Mischer (4) zugeführten Stoffmassen zugeordnet ist, umfasst, mit den Schritten:
- Vorgeben einer Rezeptur mit Masse-Sollwerten von Stoffen einer Charge der herzustellenden Baustoff-Suspension, und
- Ansteuern, auf der Grundlage der Masse-Sollwerte der Rezeptur der ersten und zweiten Dosierorgane zum Öffnen und Schließen, um nacheinander Anmischwasser und Stoff/Stoffe einer Charge der Baustoff-Suspension gemäß der Rezeptur in den Mischer (4) zuzuführen, wobei das jeweilige Dosierorgan zum Schließen angesteuert wird, sobald der Masse-Sollwert des jeweiligen Anmischwassers/Stoffes gemäß der Rezeptur in den Mischer (4) zugeführt ist,
**dadurch gekennzeichnet, dass**
- nach dem Ansteuern zum Schließen des jeweiligen Dosierorgans und vor dem Ansteuern zum Öffnen eines nächsten Dosierorgans innerhalb eines bestimmten Zeitintervalls eine Abweichung eines Istwerts eines Messwerts von der Wiegeeinrichtung (5) von dem Sollwert der zuvor in den Mischer (4) zugeführten Masse eines Stoffes überprüft/bestimmt wird und aus der Abweichung eine Änderung eines Schließzeitpunktes des jeweiligen Dosierorgans ermittelt wird, die bei der Herstellung einer nachfolgenden Charge derselben Rezeptur beim Ansteuern des Schließens des jeweiligen Dosierorgans verwendet/berücksichtigt wird.

10. Verfahren gemäß Anspruch 9,
**dadurch gekennzeichnet, dass**
die ersten und zweiten Dosierorgane nach Maßgabe eines Messwerts von der Wiegeeinrichtung (5) zum Schließen angesteuert werden, wobei das jeweilige Dosierorgan zum Schließen angesteuert wird, sobald der Masse-Sollwert des jeweiligen Anmischwassers/Stoffes gemäß der Rezeptur nach Maßgabe des Messwerts von der Wiegeeinrichtung (5) in den Mischer (4) zugeführt ist.

11. Verfahren gemäß Anspruch 9 oder 10,
**dadurch gekennzeichnet, dass**
bei einem Überschießen des Istwerts über den Sollwert der Schließzeitpunkt des jeweiligen Dosierorgans vorverlegt wird und bei einem Unterschießen des Istwerts über den Sollwert der Schließzeitpunkt des jeweiligen Dosierorgans nachverlegt wird.

12. Verfahren gemäß einem der Ansprüche 9 bis 11,
**dadurch gekennzeichnet, dass**
mit der Rezeptur auch eine Dosiertoleranz für den jeweiligen Stoff vorgegeben wird und die Dosiertoleranz bei der Überprüfung der Abweichung von Istwert und Sollwert nach dem Schließen des jeweiligen Dosierorgans und der Bestimmung der Änderung des Schließzeitpunktes des jeweiligen Dosierorgans berücksichtigt wird.

13. Verfahren gemäß einem der Ansprüche 9 bis 12,
**dadurch gekennzeichnet, dass**
die nach dem Schließen des jeweiligen Dosierorgans im Rahmen der Überprüfung erfassten Istwerte der bei der Herstellung einer jeweiligen Charge in den Mischer (4) zugeführten Stoffe protokolliert werden und als identifizierbaren Datensatz, vorzugsweise zusammen mit einem Datum/Zeitstempel und/oder erfassten Umgebungs- oder Betriebsdaten bereitgestellt werden.

14. Verfahren gemäß einem der Ansprüche 9 bis 13,
**dadurch gekennzeichnet, dass**
die nach dem Schließen des jeweiligen Dosierorgans im Rahmen der Überprüfung erfassten Istwerte der bei der Herstellung von mehreren Chargen in den Mischer (4) zugeführten Stoffe protokolliert werden und als Verbrauchswert der jeweiligen Stoffe kumuliert und als identifizierbarer Datensatz bereitgestellt werden und vorzugsweise eine Warnung und/oder Bestellung von Nachschub des jeweiligen Stoffes ausgelöst wird/werden, wenn festgestellt wird, dass ein Bestand des jeweiligen Stoffes in dem Bevorratungssilo (2, 3) unterschritten wird.

## Geänderte Patentansprüche

### Geänderte Patentansprüche gemäss Regel 137(2) EPÜ.

1. Anlage zum chargenweisen Herstellen einer Baustoff-Suspension an einer Baustelle, mit
- einer Wasserversorgung (1) für Anmischwasser, insbesondere einem Wassertank, mit einem ersten Dosierorgan an einem Auslass,
- mindestens einem Bevorratungssilo (2, 3) für jeweils einen riesel- oder fließfähigen Stoff, insbesondere Feststoff, wobei das oder jedes Bevorratungssilo (2, 3) mit einem jeweiligen zweiten Dosierorgan an einem Auslass versehen ist,
- einem Mischer (4), der so angeordnet ist, dass er mit dem Anmischwasser aus der Wasserversorgung (1) und dem Stoff, insbesondere dem Feststoff, aus dem mindestens einen oder jedem Bevorratungssilo (2, 3) beschickt werden kann, indem die jeweiligen ersten und zweiten Dosierorgane geöffnet werden, wobei dem Mischer (4) eine Wiegeeinrichtung (5) zum kontinuierlichen Messen der in den Mischer (4) zugeführten Stoffmassen zugeordnet ist, und
- einer Steuerungseinrichtung, die ausgestaltet ist, um auf der Grundlage von Masse-Sollwerten einer vorgebbaren Rezeptur die ersten und zweiten Dosierorgane zum Öffnen und Schließen anzusteuern, um nacheinander das Anmischwasser und den Stoff/die Stoffe einer Charge der Baustoff-Suspension gemäß der Rezeptur in den Mischer (4) zuzuführen, wobei das jeweilige Dosierorgan zum Schließen angesteuert wird, sobald der Masse-Sollwert des jeweiligen Anmischwassers/Stoffes gemäß der Rezeptur in den Mischer (4) zugeführt ist,
- wobei die Steuerungseinrichtung weiterhin ausgestaltet ist, um nach dem Ansteuern zum Schließen des jeweiligen Dosierorgans und vor dem Ansteuern zum Öffnen eines nächsten Dosierorgans innerhalb eines bestimmten Zeitintervalls eine Abweichung eines Istwerts eines Messwerts von der Wiegeeinrichtung (5) von dem Sollwert der zuvor in den Mischer (4) zugeführten Masse eines Stoffes zu überprüfen/bestimmen und aus der Abweichung eine Änderung eines Schließzeitpunktes des jeweiligen Dosierorgans zu ermitteln, die bei der Herstellung einer nachfolgenden Charge derselben Rezeptur beim Ansteuern des Schließens des jeweiligen Dosierorgans verwendet/berücksichtigt wird.

2. Anlage gemäß Anspruch 1,
**dadurch gekennzeichnet, dass**
die Steuerungseinrichtung ausgestaltet ist, um die ersten und zweiten Dosierorgane nach Maßgabe eines Messwerts von der Wiegeeinrichtung (5) zum Schließen anzusteuern, wobei das jeweilige Dosierorgan zum Schließen angesteuert wird, sobald der Masse-Sollwert des jeweiligen Anmischwassers/Stoffes gemäß der Rezeptur nach Maßgabe des Messwerts von der Wiegeeinrichtung (5) in den Mischer (4) zugeführt ist.

3. Anlage gemäß Anspruch 1 oder 2,
**dadurch gekennzeichnet, dass**
die Steuerungseinrichtung weiterhin ausgestaltet ist, um bei einem Überschießen des Istwerts über den Sollwert den Schließzeitpunkt des jeweiligen Dosierorgans vorzuverlegen und bei einem Unterschießen des Istwerts über den Sollwert den Schließzeitpunkt des jeweiligen Dosierorgans nachzuverlegen.

4. Anlage gemäß einem der Ansprüche 1 bis 3,
**dadurch gekennzeichnet, dass**
die Steuerungseinrichtung weiterhin so ausgestaltet ist, dass mit der Rezeptur auch eine Dosiertoleranz für den jeweiligen Stoff vorgebbar ist und die Dosiertoleranz bei der Überprüfung der Abweichung von Istwert und Sollwert nach dem Schließen des jeweiligen Dosierorgans und der Bestimmung der Änderung des Schließzeitpunktes des jeweiligen Dosierorgans berücksichtigt wird.

5. Anlage gemäß einem der Ansprüche 1 bis 4,
**dadurch gekennzeichnet, dass**
die Steuerungseinrichtung weiterhin ausgestaltet ist, um die nach dem Schließen des jeweiligen Dosierorgans im Rahmen der Überprüfung erfassten Istwerte der bei der Herstellung einer jeweiligen Charge in den Mischer (4) zugeführten Stoffe zu protokollieren und als identifizierbaren Datensatz, vorzugsweise zusammen mit einem Datum/Zeitstempel und/oder erfassten Umgebungs- oder Betriebsdaten bereitzustellen.

6. Anlage gemäß einem der Ansprüche 1 bis 5,
**dadurch gekennzeichnet, dass**
die Steuerungseinrichtung weiterhin ausgestaltet ist, um die nach dem Schließen des jeweiligen Dosierorgans im Rahmen der Überprüfung erfassten Istwerte der bei der Herstellung von mehreren Chargen in den Mischer (4) zugeführten Stoffe zu protokollieren und als Verbrauchswert der jeweiligen Stoffe zu kumulieren und als identifizierbaren Datensatz bereitzustellen, sowie vorzugsweise eine Warnung und/oder Bestellung von Nachschub des jeweiligen Stoffes auszulösen, wenn festgestellt wird, dass ein Bestand des jeweiligen Stoffes in dem Bevorratungssilo (2,3) unterschritten wird.

7. Anlage gemäß Anspruch 6,
**dadurch gekennzeichnet, dass**
die Steuerungseinrichtung weiterhin ausgestaltet ist, um auf der Basis der protokollierten Datensätze eine aktuelle Mischleistung der Anlage zu ermitteln und bereitzustellen.

8. Anlage gemäß einem der Ansprüche 1 bis 7,
**dadurch gekennzeichnet, dass**
die Steuerungseinrichtung ein Display mit einem Touch-Screen für Berührungseingaben aufweist, auf dem Komponenten der Anlage und deren produktionsrelevanten Parameter zur Überwachung der Abläufe in einem Prozess-Schaubild visualisiert werden und Eingaben, insbesondere der Rezepturen vorgenommen werden können.

9. Verfahren zum chargenweisen Herstellen einer Baustoff-Suspension an einer Baustelle, mit einer Anlage, die eine Wasserversorgung (1) für Anmischwasser, insbesondere einen Wassertank, mit einem ersten Dosierorgan an einem Auslass, mindestens ein Bevorratungssilo (2, 3) für jeweils einen riesel- oder fließfähigen Stoff, insbesondere Feststoff, wobei das oder jedes Bevorratungssilo (2, 3) mit einem jeweiligen zweiten Dosierorgan an einem Auslass versehen ist, und einen Mischer (4) aufweist, der so angeordnet ist, dass er mit dem Anmischwasser aus der Wasserversorgung (1) und dem Stoff, insbesondere dem Feststoff, aus dem mindestens einen oder jedem Bevorratungssilo (2, 3) beschickt werden kann, indem die jeweiligen ersten und zweiten Dosierorgane geöffnet werden, wobei dem Mischer (4) eine Wiegeeinrichtung (5) zum kontinuierlichen Messen der in den Mischer (4) zugeführten Stoffmassen zugeordnet ist, umfasst, mit den Schritten:
- Vorgeben einer Rezeptur mit Masse-Sollwerten von Stoffen einer Charge der herzustellenden Baustoff-Suspension, und
- Ansteuern, auf der Grundlage der Masse-Sollwerte der Rezeptur der ersten und zweiten Dosierorgane zum Öffnen und Schließen, um nacheinander Anmischwasser und Stoff/Stoffe einer Charge der Baustoff-Suspension gemäß der Rezeptur in den Mischer (4) zuzuführen, wobei das jeweilige Dosierorgan zum Schließen angesteuert wird, sobald der Masse-Sollwert des jeweiligen Anmischwassers/Stoffes gemäß der Rezeptur in den Mischer (4) zugeführt ist,
- wobei nach dem Ansteuern zum Schließen des jeweiligen Dosierorgans und vor dem Ansteuern zum Öffnen eines nächsten Dosierorgans innerhalb eines bestimmten Zeitintervalls eine Abweichung eines Istwerts eines Messwerts von der Wiegeeinrichtung (5) von dem Sollwert der zuvor in den Mischer (4) zugeführten Masse eines Stoffes überprüft/bestimmt wird und aus der Abweichung eine Änderung eines Schließzeitpunktes des jeweiligen Dosierorgans ermittelt wird, die bei der Herstellung einer nachfolgenden Charge derselben Rezeptur beim Ansteuern des Schließens des jeweiligen Dosierorgans verwendet/berücksichtigt wird.

10. Verfahren gemäß Anspruch 9,
**dadurch gekennzeichnet, dass**
die ersten und zweiten Dosierorgane nach Maßgabe eines Messwerts von der Wiegeeinrichtung (5) zum Schließen angesteuert werden, wobei das jeweilige Dosierorgan zum Schließen angesteuert wird, sobald der Masse-Sollwert des jeweiligen Anmischwassers/Stoffes gemäß der Rezeptur nach Maßgabe des Messwerts von der Wiegeeinrichtung (5) in den Mischer (4) zugeführt ist.

11. Verfahren gemäß Anspruch 9 oder 10,
**dadurch gekennzeichnet, dass**
bei einem Überschießen des Istwerts über den Sollwert der Schließzeitpunkt des jeweiligen Dosierorgans vorverlegt wird und bei einem Unterschießen des Istwerts über den Sollwert der Schließzeitpunkt des jeweiligen Dosierorgans nachverlegt wird.

12. Verfahren gemäß einem der Ansprüche 9 bis 11,
**dadurch gekennzeichnet, dass**
mit der Rezeptur auch eine Dosiertoleranz für den jeweiligen Stoff vorgegeben wird und die Dosiertoleranz bei der Überprüfung der Abweichung von Istwert und Sollwert nach dem Schließen des jeweiligen Dosierorgans und der Bestimmung der Änderung des Schließzeitpunktes des jeweiligen Dosierorgans berücksichtigt wird.

13. Verfahren gemäß einem der Ansprüche 9 bis 12,
**dadurch gekennzeichnet, dass**
die nach dem Schließen des jeweiligen Dosierorgans im Rahmen der Überprüfung erfassten Istwerte der bei der Herstellung einer jeweiligen Charge in den Mischer (4) zugeführten Stoffe protokolliert werden und als identifizierbaren Datensatz, vorzugsweise zusammen mit einem Datum/Zeitstempel und/oder erfassten Umgebungs- oder Betriebsdaten bereitgestellt werden.

14. Verfahren gemäß einem der Ansprüche 9 bis 13,
**dadurch gekennzeichnet, dass**
die nach dem Schließen des jeweiligen Dosierorgans im Rahmen der Überprüfung erfassten Istwerte der bei der Herstellung von mehreren Chargen in den Mischer (4) zugeführten Stoffe protokolliert werden und als Verbrauchswert der jeweiligen Stoffe kumuliert und als identifizierbarer Datensatz bereitgestellt werden und vorzugsweise eine Warnung und/oder Bestellung von Nachschub des jeweiligen Stoffes ausgelöst wird/werden, wenn festgestellt wird, dass ein Bestand des jeweiligen Stoffes in dem Bevorratungssilo (2, 3) unterschritten wird.
